# EUROPÄISCHE PATENTANMELDUNG

(11) **EP 2 871 605 A1**
(43) Veröffentlichungstag der Anmeldung: **13.05.2015**
(21) Anmeldenummer: 13191788.2
(22) Anmeldetag: 06.11.2013
(51) Int. Cl.: G06Q 20/32, G06Q 10/08

(54) **System und Verfahren zur Abwicklung einer elektronischen Zahlungstransaktion in Bezug auf eine Warentransaktion**

(71) Anmelder: Lavego AG, 80639 München (DE)
(72) Erfinder: Gohlke, Florian, 80333 München (DE)
(74) Vertreter: Klunker . Schmitt-Nilson . Hirsch

(57) **Zusammenfassung**

Ein System zur Abwicklung einer elektronischen Zahlungstransaktion in Bezug auf eine Warentransaktion weist wenigstens ein Transaktionsterminal und ein vom Transaktionsterminal separates und entferntes Server-Computersystem für das Transaktionsterminal auf, wobei das Transaktionsterminal über eine Identifikationskennung identifizierbar und zur Abwicklung einer elektronischen Zahlungstransaktion in Bezug auf eine Warentransaktion über ein Kommunikationsnetzwerk mit dem Server-Computersystem koppelbar ist. Es werden Kartendaten wenigstens einer Karte für den elektronischen Zahlungsverkehr und ein Bezahlbetrag an dem Transaktionsterminal erfasst, sowie wenigstens ein Zusatzmerkmal eines Auftraggebers der Warentransaktion. Diese Daten werden von dem Transaktionsterminal an das Server-Computersystem übertragen. Es erfolgt eine Authentifizierung des Transaktionsterminals am Server-Computersystem, eine Autorisierung einer Kartenzahlungstransaktion in Bezug auf die übertragenen Kartendaten und des Bezahlbetrags unter Erfassung von Kartenzahlungsdaten durch das Server-Computersystem, und durch das Server-Computersystem eine Veranlassung einer ersten elektronischen Zahlungstransaktion aus den Kartenzahlungsdaten an das erste Transaktionssystem, das einem Betreiber des Server-Computersystems zugeordnet ist, und Veranlassung einer zweiten elektronischen Zahlungstransaktion von dem ersten Transaktionssystem an ein zweites Transaktionssystem, das dem Auftraggeber der Warentransaktion zugeordnet ist, unter Heranziehung des Zusatzmerkmals des Auftraggebers.

## Beschreibung

Die vorliegende Erfindung betrifft ein System und ein Verfahren zur Abwicklung einer elektronischen Zahlungstransaktion in Bezug auf eine Warentransaktion unter Verwendung wenigstens eines Transaktionsterminals und eines vom Transaktionsterminal separaten und entfernten Server-Computersystems für das Transaktionsterminal.

In den vergangenen Jahren hat der elektronische (bargeldlose) Zahlungsverkehr erheblich zugenommen. Der elektronische Zahlungsverkehr bietet etwa den Vorteil, dass Käufer nicht mehr größere Geldbeträge mit sich führen müssen, um Einkäufe tätigen zu können oder Waren geliefert zu bekommen.

Das Prinzip des bargeldlosen Zahlungsverkehrs mit der Möglichkeit einer bargeldlosen Bezahlung auch vor Ort, das heißt am sogenannten Point-of-Sale, ist seit Langem bekannt. Hierbei kommen in Deutschland vor allem die sogenannte girocard (vormals bekannt als EC-Karte) sowie Debit- und Kreditkarten zum Einsatz, deren Benutzung von modernen Kasseneinrichtungen nahezu aller Verkaufsstellen unterstützt wird. Die entsprechenden Kasseneinrichtungen sind hierzu bekanntermaßen mit Lesegeräten ausgestattet, in welche die jeweilige Karte zum Auslesen zahlungsrelevanter Daten von einem Magnetstreifen und/oder aus einem Kartenchip eingeführt wird. Nach dem Auslesen der entsprechenden Daten und einer Bestätigung des zugrunde liegenden Kaufvorgangs durch den Kartenbenutzer erfolgt die jeweilige Zahlungstransaktion zur Durchführung eines bargeldlosen Bezahlvorgangs über eine Datenverbindung der betreffenden Kasseneinrichtung mit einem Transaktionssystem (einem so genannten Backendsystem), das heißt technischen Einrichtungen eines Zahlungsdienstleisters als Bereitsteller des für die Bezahlung genutzten Bezahlsystems. Durch das Backendsystem werden die mit einem Bezahlvorgang verbundenen Zahlungstransaktionen, nämlich Belastung eines Kontos des Käufers mit dem jeweiligen Bezahlbetrag und Gutschrift eines korrespondierenden Betrages (eventuell unter Abzug von Gebühren) auf einem Konto des Verkäufers, abgewickelt.

Die am Point-of-Sale eingesetzten Lesegeräte verfügen üblicherweise über eine sichere Tastatur zur Eingabe einer Geheimzahl, ein sog. "PIN-Pad". Bezahlvorgänge, die über eine PIN gesichert wurden, besitzen üblicherweise eine Zahlungsgarantie des jeweiligen Kartenherausgebers. Die Zahlungen erfolgen in einer abgesicherten, zertifizierten Umgebung. Bei Bezahlvorgängen im Internet hingegen gibt es mehrere Nachteile. So muss der Käufer dem Händler seine Karten- oder Kontodaten preisgeben; die Daten werden über das Internet übertragen und können abgefangen, missbraucht oder manipuliert werden. Sowohl bei Lastschriften als auch bei Kreditkartenzahlungen im Internet gibt es mangels PIN-Prüfung keine Zahlungsgarantie. Das Risiko trägt entweder der Händler selbst oder ein beauftragter Dienstleister, der dafür zusätzliche Gebühren berechnet.

Im klassischen Netzbetrieb des bargeldlosen Zahlungsverkehrs zum Beispiel mit der girocard erfolgt im Allgemeinen die Zuordnung der Zahlungsumsätze an den Händler über die eindeutige Nummer des Transaktionsterminals (sog. "Terminal-ID" oder "TID") am Point of Sale, die in jedem Zahlungsdatensatz enthalten ist. Mittels eines Transaktionsterminals, das beispielsweise ein Kartenlesegerät aufweist, wird die Bezahlung mittels einer girocard, wie oben beschrieben, am Point of Sale in allgemein bekannter Weise vorgenommen. Die Stammdaten eines Händlers enthalten einerseits die Bankverbindung, auf dem die Umsätze mit der girocard gutgeschrieben werden sollen, und andererseits die Terminal-ID('s) des/der Transaktionsterminal(s) des Händlers. Dabei ist es bekannt, dass der Einzug der Kartenumsätze entweder direkt auf das Konto des Händlers oder der Einzug auf ein Treuhandkonto erfolgt und im Anschluss der Gesamtbetrag in einer Summe an das Händlerkonto überwiesen wird. In beiden Fällen ist das Gutschriftskonto über die TID in den Stammdaten fest mit dem Händler verknüpft.

Bei der Variante des direkten Einzugs auf das Händlerkonto erfolgt der Zahlungsverkehr (entkoppelt von der Autorisierung) im Allgemeinen wie folgt: In den einzelnen Zahlungsnachrichten sind die Bankverbindungen der Karteninhaber und die TID enthalten. In den Stammdaten der Händler ist dessen Bankverbindung für die Gutschrift und ebenfalls die TID hinterlegt. Der Netzbetreiber des elektronischen Zahlungsverkehrs kann über die TID jeden Umsatz einem Händler und damit dessen Bankverbindung zuordnen. Der Netzbetreiber erzeugt mit Hilfe dieser Informationen eine Zahlungsverkehrsdatei (bis 31.1.2014 DTA-Format möglich, ab 1.2.2014 SEPA-Format), in der u.a. die Bankverbindung des Händlers und alle Bankverbindungen der Karteninhaber sowie deren Einzelbeträge enthalten sind. Diese Datei wird per Datenfernübertragung (DFÜ) an die Hausbank des Händlers übertragen. Die Hausbank zieht dann die einzelnen Beträge bei den Banken der Karteninhaber ein und schreibt sie dem Konto des Händlers gut.

Bei der Variante der Zahlung über ein Treuhandkonto erzeugt der Netzbetreiber wie oben eine Datei mit den Bankverbindungen der Karteninhaber und den Einzelbeträgen. Das Gutschriftskonto ist jedoch ein Treuhandkonto des beauftragten Zahlungsinstituts (Netzbetreiber können, müssen aber nicht Zahlungsinstitut im Sinne des Zahlungsdiensteaufsichtsgesetzes sein). Parallel erzeugt der Netzbetreiber eine Datei mit Überweisungen vom Treuhandkonto an das Gutschriftskonto des Händlers. Die Hausbank des Händlers führt nur noch eine Gutschrift aus und muss keine einzelnen Einzüge mehr je Kartenzahlung ausführen. Das ist für den Händler meist erheblich preiswerter als der direkte Einzug auf sein Konto.

Bei beiden Varianten erfolgt die Zuordnung der Umsätze zum Händler über die Nummer des Transaktionsterminals (TID).

Dieses bargeldlose Bezahlsystem ist insbesondere bei Kauf oder Bestellung einer Ware bei einem Händler über das Internet und anschließender Lieferung der Ware durch einen Paketdienst (sogenanntes Online-Shopping) unter Nutzung der TID nicht möglich, da nicht der Händler die Ware an den Käufer übergibt, sondern ein zwischengeschalteter Paketdienst, der die Ware vom Händler an den Käufer liefert. Bei Verwendung des oben beschriebenen Verfahrens müsste der Paketdienst für jeden Händler ein eigenes Transaktionsterminal mit einer eigenen TID mitführen und je nach Händler differenziert benutzen, um die elektronische Zahlung über die TID des verwendeten Transaktionsterminals dem Händler zuzuordnen. Dies ist wegen der Vielzahl an Händlern für einen Paketdienst nicht praktikabel. Damit fehlt jedoch eine direkte Zuordnungsmöglichkeit der Umsätze, die von einem Paketdienst entgegengenommen werden, zum jeweiligen Händler. Eine alternative bargeldlose Zahlungsvariante sind die hier bereits etablierten, oben beschriebenen Zahlungsverfahren per Kreditkarte oder Lastschrifteinzugsverfahren, bei denen jedoch sensible Kartendaten bzw. Bankdaten des Käufers vor Lieferung der Ware über das Internet übertragen werden müssen.

In US 2002/0026413 A1 und US 2005/0035190 A1 sind jeweils Transaktionsgeräte und - systeme zur technischen Abwicklung von elektronischen Zahlungstransaktionen beschrieben.

Aufgabe der vorliegenden Erfindung ist es, ein System und ein Verfahren zur Abwicklung einer bargeldlosen Zahlungstransaktion in Bezug auf eine Warentransaktion bereitzustellen, welche eine bedienungsfreundliche und gleichzeitig sichere Abwicklung eines bargeldlosen Zahlungsvorganges bei Warentransaktionen über das Internet ermöglichen. Ferner soll das Betrugs- bzw. Missbrauchsrisiko reduziert werden.

Die Aufgabe wird gelöst durch ein System und Verfahren zur Abwicklung einer elektronischen Zahlungstransaktion in Bezug auf eine Warentransaktion nach den Ansprüchen 1 und 13. Die Erfindung betrifft auch ein Transaktionsterminal, das zur Verwendung in einem solchen Verfahren eingerichtet ist, und ein Server-Computersystem, das zur Verwendung in einem solchen Verfahren eingerichtet ist.

Ein Aspekt der Erfindung betrifft ein System zur Abwicklung einer elektronischen Zahlungstransaktion in Bezug auf eine Warentransaktion, aufweisend wenigstens ein Transaktionsterminal und ein vom Transaktionsterminal separates und entferntes Server-Computersystem für das Transaktionsterminal, wobei das Transaktionsterminal über eine Identifikationskennung identifizierbar und zur Abwicklung einer elektronischen Zahlungstransaktion in Bezug auf eine Warentransaktion über ein Kommunikationsnetzwerk mit dem Server-Computersystem koppelbar ist, und folgendes aufweist: eine Erfassungseinrichtung zum Erfassen von Kartendaten wenigstens einer Karte für den elektronischen Zahlungsverkehr, eine erste Eingabeschnittstelle, die geeignet ist, einen Bezahlbetrag zu erfassen, eine zweite Eingabeschnittstelle, die geeignet ist, ein oder mehrere Zusatzmerkmale eines Auftraggebers (im Folgenden nur "Zusatzmerkmal") der Warentransaktion zu erfassen, und eine Übertragungseinrichtung zur Übertragung von Daten an das Server-Computersystem, welche die Identifikationskennung, wenigstens einen Teil der erfassten Kartendaten, den Bezahlbetrag und das Zusatzmerkmal des Auftraggebers beinhalten. Das Server-Computersystem ist zur Abwicklung von elektronischen Zahlungstransaktionen über ein Kommunikationsnetzwerk mit einem ersten Transaktionssystem koppelbar und weist folgendes auf: eine Empfangseinrichtung zum Empfang der vom Transaktionsterminal übertragenen Daten, eine Authentifizierungseinrichtung zur Authentifizierung des Transaktionsterminals am Server-Computersystem, eine Autorisierungseinrichtung, die eingerichtet ist, eine Kartenzahlungstransaktion in Bezug auf die übertragenen Kartendaten und des Bezahlbetrags unter Erfassung von Kartenzahlungsdaten zu autorisieren, und eine Anweisungseinrichtung, die eingerichtet ist, eine erste elektronische Zahlungstransaktion aus den Kartenzahlungsdaten an das erste Transaktionssystem zu veranlassen, das einem Betreiber des Server-Computersystems zugeordnet ist und unter Heranziehung des Zusatzmerkmals des Auftraggebers eine zweite elektronische Zahlungstransaktion von dem ersten Transaktionssystem an ein zweites Transaktionssystem zu veranlassen, das dem Auftraggeber der Warentransaktion zugeordnet ist.

Ein weiterer Aspekt der Erfindung betrifft ein Verfahren zur Abwicklung einer elektronischen Zahlungstransaktion in Bezug auf eine Warentransaktion in einem Datenverarbeitungsnetzwerk, das wenigstens ein Transaktionsterminal und ein vom Transaktionsterminal separates und entferntes Server-Computersystem für das Transaktionsterminal aufweist, wobei das Transaktionsterminal über eine Identifikationskennung identifizierbar und zur Abwicklung einer elektronischen Zahlungstransaktion in Bezug auf eine Warentransaktion über ein Kommunikationsnetzwerk mit dem Server-Computersystem koppelbar ist, und das Server-Computersystem zur Abwicklung von elektronischen Zahlungstransaktionen über ein Kommunikationsnetzwerk mit einem ersten Transaktionssystem koppelbar ist. Das Verfahren umfasst die folgenden Schritte: Erfassen von Kartendaten wenigstens einer Karte für den elektronischen Zahlungsverkehr an dem Transaktionsterminal, Erfassen eines Bezahlbetrags an dem Transaktionsterminal, Erfassen wenigstens eines Zusatzmerkmals eines Auftraggebers der Warentransaktion an dem Transaktionsterminal, Übertragung von Daten von dem Transaktionsterminal an das Server-Computersystem, welche die Identifikationskennung, wenigstens einen Teil der erfassten Kartendaten, den Bezahlbetrag und das Zusatzmerkmal des Auftraggebers beinhalten, Empfangen der vom Transaktionsterminal übertragenen Daten am Server-Computersystem, Authentifizierung des Transaktionsterminals am Server-Computersystem, Autorisierung einer Kartenzahlungstransaktion in Bezug auf die übertragenen Kartendaten und des Bezahlbetrags unter Erfassung von Kartenzahlungsdaten durch das Server-Computersystem, und Veranlassung durch das Server-Computersystem einer ersten elektronischen Zahlungstransaktion aus den Kartenzahlungsdaten an das erste Transaktionssystem, das einem Betreiber des Server-Computersystems zugeordnet ist, und Veranlassung einer zweiten elektronischen Zahlungstransaktion von dem ersten Transaktionssystem an ein zweites Transaktionssystem, das dem Auftraggeber der Warentransaktion zugeordnet ist, unter Heranziehung des Zusatzmerkmals des Auftraggebers.

Die vorliegende Erfindung bietet den Vorteil, dass mit der geschaffenen direkten Zuordnungsmöglichkeit der Umsätze eines Paketdienstes zum Auftraggeber (Händler) der Warentransaktion über das Zusatzmerkmal des Auftraggebers die Möglichkeit eröffnet wird, dass der Kunde, welcher die Warentransaktion erhält, beispielsweise mit girocard oder Prepaid-Karte beim Erhalt der Ware bezahlen kann. Damit vereint die vorliegende Erfindung Vorteile des gegenwärtigen Nachnahme-Verfahrens mit den technischen Vorteilen von elektronischen Zahlungstransaktionen unter gleichzeitiger Berücksichtigung von sicherheitsrelevanten Aspekten bei der technischen Zahlungstransaktions-Abwicklung. Das Transaktionsterminal wird demnach vom Paketdienst betrieben, beispielsweise von einem Fahrer des Paketdienstes, von einem Paketshop oder von einer automatisierten Packstation. Das Bindeglied zur Auflösung dieser m:n - Beziehung (m Käufer bzw. Karteninhaber und n Auftraggeber bzw. Händler) dient das sowohl beim Server-Computersystem als auch beim Paketdienst (z.B. im Transaktionsterminal) hinterlegte Zusatzmerkmal des Auftraggebers, etwa die Kundennummer des Händlers. Der Betreiber des Server-Computersystems zieht, ähnlich wie im oben beschriebenen klassischen Netzbetrieb (mit sich selbst als Händler), Kartenzahlungen auf ein Treuhandkonto (als Teil des ersten Transaktionssystems) ein. Die Zahlungstransaktionen vom Treuhandkonto an die den Auftraggebern (Händlern) zugeordneten jeweiligen Transaktionssysteme und deren Konten werden über das Zusatzmerkmal des Auftraggebers (z.B. die Kundennummer des Händlers beim Paketdienst) erzeugt.

Im Prinzip kann das wenigstens eine Zusatzmerkmal des Auftraggebers ein beliebiges Merkmal des Auftraggebers sein und in das Transaktionsterminal direkt oder indirekt (z.B. durch Einspeisung über den Paketdienst) eingelesen werden, das auch im Server-Computersystem hinterlegt ist. Dazu könnte beispielsweise in den Stammdaten des Paketdienstes ein neues Feld, etwa "Nachnahme-Zusatzmerkmal", eingeführt werden, das auch dem Server-Computersystem mitgeteilt wird, damit dieses bei Datenübertragung vom Transaktionsterminal die Korrelation herstellen kann. Im Folgenden werden beispielhafte Ausführungsformen beschrieben.

Gemäß einer Ausführungsform beinhaltet das Zusatzmerkmal des Auftraggebers der Warentransaktion eine Auftraggeber-Identifikationskennung, beispielsweise eine Kundennummer des Auftraggebers bei einem Lieferungsdienstleister, welcher die Warentransaktion ausführt.

Gemäß einer anderen Ausführungsform beinhaltet das Zusatzmerkmal des Auftraggebers der Warentransaktion eine Identifizierungskennung der Warentransaktion, zum Beispiel eine Sendungsnummer der Warentransaktion.

In diesem Fall ist es vorteilhaft, wenn das Server-Computersystem eingerichtet ist, für eine Zuordnung der Identifizierungskennung an den Auftraggeber auf eine interne oder externe Datenbank zuzugreifen, in der jeder Identifizierungskennung eindeutig eine Identifikation des Auftraggebers der Warentransaktion zugeordnet ist.

Gemäß einer anderen Ausführungsform beinhaltet das Zusatzmerkmal des Auftraggebers der Warentransaktion eine Bankverbindung des Auftraggebers der Warentransaktion.

Beispielsweise ist das Transaktionsterminal bzw. dessen zweite Eingabeschnittstelle eingerichtet, das Zusatzmerkmal des Auftraggebers der Warentransaktion manuell oder über eine Schnittstelle von einem anderen Gerät, z.B. in Form eines Scanners oder einer automatisierten Packstation, zu erfassen.

Gemäß einer Ausführungsform weist das Server-Computersystem einen Transaktionsdatenspeicher auf, in welchem das Zusatzmerkmal des Auftraggebers und die übertragenen Kartendaten gespeichert sind.

Vorzugsweise weist das Server-Computersystem einen Stammdatenspeicher auf, in dem jeweilige Zusatzmerkmale von mehreren Auftraggebern von Warentransaktionen gespeichert sind. Beispielsweise ist das Server-Computersystem bzw. dessen Anweisungseinrichtung eingerichtet, auf den Stammdatenspeicher des Server-Computersystems zuzugreifen und zur Veranlassung der zweiten elektronischen Zahlungstransaktion das zweite Transaktionssystem anhand eines aus dem Stammdatenspeicher ausgewählten Zusatzmerkmals zu bestimmen.

Gemäß einer Ausführungsform weist das Transaktionsterminal bzw. dessen Erfassungseinrichtung zum Erfassen von Kartendaten eine Kartenleseeinrichtung auf, die beispielsweise als eine Magnetstreifen-, Chip- und/oder Kontaktlos-Leseeinrichtung ausgebildet ist.

Die Autorisierungseinrichtung des Server-Computersystems ist insbesondere zur Verarbeitung einer bereits von der Karte und dem Transaktionsterminal oder auf anderem Wege vorautorisierten Kartenzahlungstransaktion ausgebildet (z.B. zur Ausführung von OfflineZahlungen oder Zahlungen mit Prepaid-Karten), ohne dass eine Verbindung zu einem entsprechenden Server und weiter zu den Systemen der Kartenherausgeber aufgebaut werden muss.

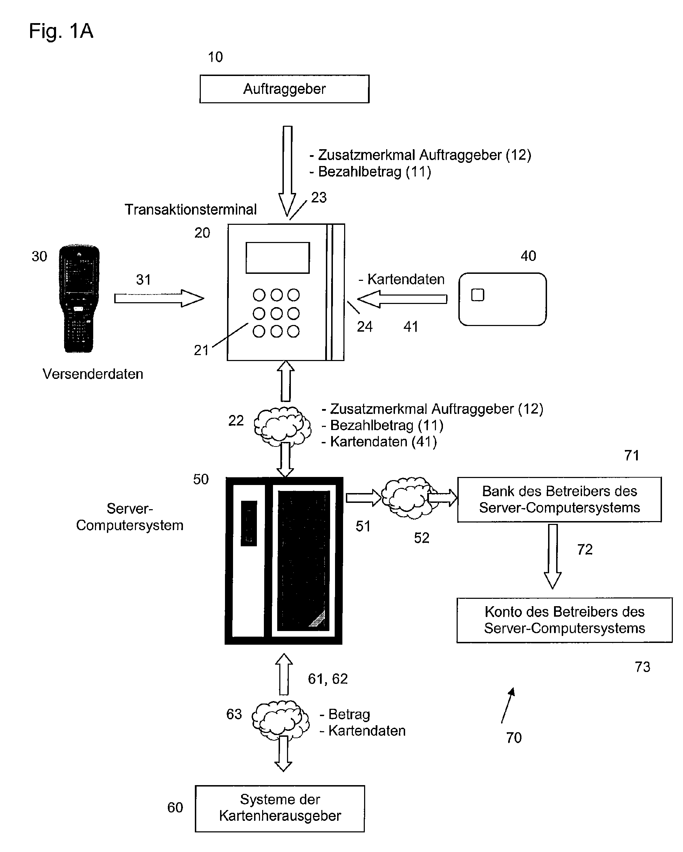

Eine Ausführungsform der Erfindung wird im Folgenden anhand der Figuren näher erläutert. Es zeigen
- Fig. 1A: eine Ausführungsform eines ersten Teils eines erfindungsgemäßen Systems, welches zur Durchführung eines Verfahrens zur bargeldlosen Zahlungstransaktion in Bezug auf eine Warentransaktion geeignet ist,

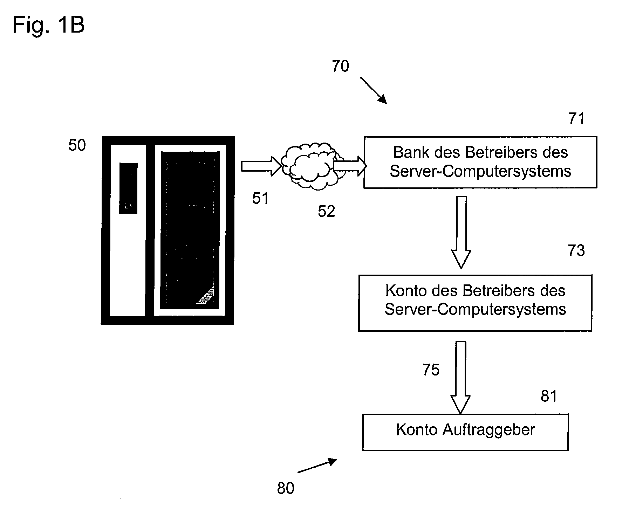

- Fig. 1B: eine Ausführungsform eines weiteren Teils des erfindungsgemäßen Systems gemäß Fig. 1A.

Figur 1 zeigt eine Ausführungsform eines Systems zur Abwicklung einer elektronischen Zahlungstransaktion in Bezug auf eine Warentransaktion gemäß der Erfindung. Das System 1 weist wenigstens ein Transaktionsterminal 20 und ein vom Transaktionsterminal separates und entferntes Server-Computersystem 50 für das Transaktionsterminal auf. In dem System 1 können mehrere Transaktionsterminals 20 betrieben werden, beispielsweise von einem Paketdienst, der an mehrere Fahrer jeweils ein Transaktionsterminal 20 ausgibt, so dass jeder Fahrer ein solches bei der Warenauslieferung benutzen kann. Jedes Transaktionsterminal 20 ist über eine Identifikationskennung identifizierbar und kann zur Abwicklung einer elektronischen Zahlungstransaktion in Bezug auf eine Warentransaktion über ein Kommunikationsnetzwerk 22 mit dem Server-Computersystem 50 gekoppelt werden. Das Kommunikationsnetzwerk 22 ist beispielsweise ein eigenes vom Betreiber des Server-Computersystems betriebenes Netzwerk, wie es beispielsweise im bekannten Netzbetrieb bei girocards verwendet wird.

Ein jeweiliges Transaktionsterminal 20 weist eine Erfassungseinrichtung 24 zum Erfassen von Kartendaten wenigstens einer Karte für den elektronischen Zahlungsverkehr auf. Die Erfassungseinrichtung 24 (die nicht explizit dargestellt ist) ist oder enthält zum Beispiel eine Kartenleseeinrichtung, die als eine Magnetstreifen-, Chip- und/oder Kontaktlos-Leseeinrichtung ausgebildet sein kann. Damit können Kartendaten 41 einer Karte 40, zum Beispiel einer girocard, eingelesen werden.

Des Weiteren weist jedes Transaktionsterminal 20 eine erste Eingabeschnittstelle 21, etwa in Form einer Tastatur, auf, die geeignet ist, einen Bezahlbetrag 11 und/oder andere Informationen zu erfassen. Eine zweite Eingabeschnittstelle, welche die gleiche Tastatur oder ein Lesegerät sein kann, ist vorgesehen, um ein Zusatzmerkmal 12 eines Auftraggebers 10 (z.B. ein Händler) der Warentransaktion zu erfassen. Eine Übertragungseinrichtung (nicht dargestellt) dient zur Übertragung von Daten an das Server-Computersystem 50 über das Kommunikationsnetzwerk 22, welche die Identifikationskennung, wenigstens einen Teil der erfassten Kartendaten 41, den Bezahlbetrag 11 und das Zusatzmerkmal 12 des Auftraggebers beinhalten. Auch können an das Transaktionsterminal 20 Versenderdaten 31 von einem externen Gerät 30, beispielsweise einem Scanner, übertragen werden. Die Versenderdaten 31 können z.B. eine Sendungsnummer (Paketnummer) enthalten.

Das Server-Computersystem 50 ist zur Abwicklung von elektronischen Zahlungstransaktionen über ein Kommunikationsnetzwerk 52 mit einem ersten Transaktionssystem 70 koppelbar. Das erste Transaktionssystem 70 ist zum Beispiel ein Bank-Transaktionssystem einer Bank 71 des Betreibers des Server-Computersystems. Es enthält beispielsweise eine Verrechnungseinrichtung (nicht dargestellt), welche einen Servercomputer oder mehrere Servercomputer umfasst, und ein Konto 73 des Betreibers, dem durch eine elektronische Zahlungstransaktion 72 ein Geldbetrag gutgeschrieben wird (ein Konto ist im Kontext der vorliegenden Erfindung als technischer Speicherort zu verstehen, an dem Information über einen Geldbetrag gespeichert wird, allgemein realisiert durch eine entsprechende technische Einrichtung im Transaktionssystem, etwa einen Transaktionsserver, wie allgemein bekannt). Das Transaktionssystem 70 ist dem Betreiber des Server-Computersystems zugeordnet. Insbesondere ist der Teil (Konto bzw. entsprechende Partition einer technischen Einrichtung, auf der das Konto abgebildet ist) des Transaktionssystems, dem die Zahlungstransaktion gutgeschrieben wird, dem Betreiber zugeordnet. Das Server-Computersystem überträgt entsprechende Informationen 51 über ein Kommunikationsnetzwerk 52 an das Transaktionssystem 70.

Das Server-Computersystem 50 kann durch ein allgemein bekanntes Serversystem gebildet sein und einen Servercomputer oder mehrere Servercomputer (Serverfarm) umfassen. Das Server-Computersystem bildet vorliegend ein Computersystem, das mit einem oder mehreren anderen Computern, sogenannten Clients (vorliegend die Transaktionsterminals 20), kommuniziert, um ihnen Zugang zu bestimmten Dienstleistungen (genannt Dienste) zu verschaffen oder bestimmte Dienste auszuführen, wie im vorliegenden Fall elektronische Zahlungstransaktionen. Das Server-Computersystem 50 weist eine Empfangseinrichtung (nicht dargestellt) zum Empfang der vom jeweiligen Transaktionsterminal 20 übertragenen Daten auf, sowie eine Authentifizierungseinrichtung zur Authentifizierung des Transaktionsterminals 20 am Server-Computersystem 50. Hierzu wird beispielsweise die Identifikationskennung (etwa eine ID-Nummer) des Transaktionsterminals verwendet. Das Server-Computersystem 50 bildet oder enthält außerdem eine Autorisierungseinrichtung, die eingerichtet ist, eine Kartenzahlungstransaktion in Bezug auf die vom Transaktionsterminal 20 übertragenen Kartendaten und des Bezahlbetrags unter Erfassung von entsprechenden Kartenzahlungsdaten zu autorisieren.

Z.B. erfolgt durch die Autorisierungseinrichtung eine Verarbeitung einer bereits von der Karte 40 und dem Transaktionsterminal 20 oder auf anderem Wege vorautorisierten Kartenzahlungstransaktion, wie es bei sogenannten Offline-Zahlungen oder Zahlungen mit Prepaid-Karten bekannt ist. Hierzu werden entsprechende Kartendaten bezüglich einer bereits von der Karte und dem Transaktionsterminal oder auf anderem Wege vorautorisierten Kartenzahlungstransaktion nach der Übertragung vom Transaktionsterminal im Server-Computersystem gespeichert.

Weiterhin kann zur Autorisierung einer Kartenzahlungstransaktion in anderen Fällen von Kartenzahlungen durch das Server-Computersystem 50 bzw. dessen Autorisierungseinrichtung in allgemein bekannter Weise eine Zahlungstransaktionsanfrage 61 über ein Kommunikationsnetzwerk 63 an ein Serversystem 60 eines der Karte zugeordneten Kartenherausgebers übertragen werden. Vom Server-Computersystem 50 wird dann ein vom Serversystem 60 erhaltenes Ergebnis 62 (mit entsprechenden Kartenzahlungsdaten) der Zahlungstransaktionsanfrage gespeichert.

Weiterhin bildet oder weist das Server-Computersystem 50 eine Anweisungseinrichtung auf, die eine erste elektronische Zahlungstransaktion 72 aus den zuvor erfassten Kartenzahlungsdaten an das erste Transaktionssystem 70 veranlasst oder leitet, das dem Betreiber des Server-Computersystems zugeordnet ist. Beispielsweise wird die erste elektronische Zahlungstransaktion auf ein Treuhandkonto (bzw. den entsprechenden Speicherort) des ersten Transaktionssystems geleitet. Weiterhin wird, für die letztendliche Gutschrift auf dem Konto (bzw. entsprechenden Speicherort) des Auftraggebers, unter Heranziehung des Zusatzmerkmals 12 des Auftraggebers, eine zweite elektronische Zahlungstransaktion 75 von dem ersten Transaktionssystem 70 an ein zweites Transaktionssystem 80 veranlasst oder geleitet, das dem Auftraggeber 10 der Warentransaktion zugeordnet ist. Insbesondere ist der Teil (Konto) des Transaktionssystems 80, dem die Zahlungstransaktion 75 gutgeschrieben wird, dem Auftraggeber (Händler) zugeordnet. Das zweite Transaktionssystem 80 ist beispielsweise ein Bank-Transaktionssystem der Bank des Auftraggebers 10, welches das Konto 81 des Auftraggebers unterhält. Wenn die Bank des Auftraggebers der Bank des Betreibers entspricht, wird das erste Transaktionssystem 70 durch das Bank-Transaktionssystem dieser Bank einschließlich des Betreiberkontos 73 gebildet, während das zweite Transaktionssystem 80 durch das Bank-Transaktionssystem dieser Bank einschließlich des Auftraggeberkontos 81 gebildet wird.

Die Kommunikation über die Kommunikationsnetzwerke 22, 52, 63 kann beispielsweise über ein drahtgebundenes Kommunikationsnetzwerk oder Funknetz bzw. Mobilfunknetz abgewickelt werden. Als Datenaustauschprotokoll kann in beiden Fällen das Internetprotokoll TCP/IP verwendet werden.

Das Server-Computersystem ist von dem ersten und zweiten Transaktionssystem verschieden. Sie können, wie hierin beschrieben, über ein oder mehrere Kommunikationsnetzwerke oder -wege gekoppelt sein und auf diese Art Daten kommunizieren.

Die Transaktionssysteme 70, 80 und das Server-Computersystem können jeweils von einem unabhängigen Zahlungsdienstleister betrieben werden, der insbesondere für die Verwaltung der jeweiligen Stammdaten der Kunden und der Auftraggeber (Händler) sowie für die Abwicklung des Zahlungsvorganges zuständig und verantwortlich ist.

Das Transaktionsterminal 20 kann beispielsweise ein mobiles Zahlungsterminal (wie vom Prinzip her etwa in Restaurants gebräuchlich), welches von einem Fahrer eines Lieferdienstes mitgeführt wird, oder ein fest installiertes Zahlungsterminal (z.B. installiert in einer Packstation) sein, wie vom Prinzip her etwa gebräuchlich in einem Supermarkt, einem Automaten, etwa für Bahntickets, Parktickets oder dergleichen). Das Transaktionsterminal 20 kann über eine Tastatur für die Eingabe eines zu zahlenden Betrages und/oder weiterer Eingaben verfügen, den bzw. die beispielsweise der Paketdienst-Fahrer oder ein Bediensteter einer Packstation bei Auslieferung der Warentransaktion eingeben kann. Alternativ kann hierfür auch eine Schnittstelle vorgesehen sein, über welche das Transaktionsterminal 20 beispielsweise mit einer Registrierkasse gekoppelt werden kann, sodass über die Schnittstelle der zu zahlende Betrag von der Registrierkasse an das Transaktionsterminal übertragen werden kann.

Das Transaktionsterminal weist in einer Ausführungsform eine Anzeigeeinrichtung auf, an welcher der zu zahlende Betrag angezeigt werden kann. Ferner kann an der Anzeigeeinrichtung auch eine zuvor eingegebene oder gespeicherte Identifikationskennung des Auftraggebers, welche vorzugsweise weltweit eindeutig ist, angezeigt werden, beispielsweise damit der Fahrer erkennt, dass der Warentransaktion und nachfolgenden Zahlungstransaktion ein Auftraggeber zugeordnet wurde, dem die Zahlungstransaktion zugeleitet werden kann. Die Anzeige von Statusinformationen über den Verlauf der Zahlungstransaktion ist ebenfalls möglich.

Das externe Gerät 30, wie etwa ein Scanner des Paketdienstes zur Verarbeitung von Versenderdaten, kann mit dem Transaktionsterminal 20 z.B. über eine NFC-Schnittstelle (Near-Field-Communication), Bluetooth oder WiFi kommunizieren, über welche der Austausch der für die bargeldlose Zahlungstransaktion erforderlichen Daten abgewickelt werden kann.

Das Transaktionsterminal kann beispielsweise auch ein Mobiltelefon, ein Tablet-PC oder dergleichen sein, das bzw. der dazu eingerichtet ist, die beschriebenen Daten zu erfassen und gegebenenfalls zu speichern. Ein solches Gerät kann beispielsweise über eine NFC-Schnittstelle, Bluetooth oder WiFi mit einem Kartenlesegerät kommunizieren. Das Zusatzmerkmal des Auftraggebers, z.B. eine Auftraggeber-Identifikationskennung, kann beispielsweise über das Internet als Kommunikationsnetzwerk vom jeweiligen Auftraggeber oder von einer zentralen Stammdatenbank des Paketdienstes abgefragt und gespeichert werden. Auf dem Transaktionsterminal kann eine Anwendung vorgesehen sein, welche für die Abwicklung des erfindungsgemäßen Verfahrens angepasst ist.

Auch kann das Transaktionsterminal eine Bildaufnahmeeinrichtung aufweisen, etwa eine Kamera, mit welcher ein an einem Warenpaket angebrachter grafischer Code erfasst werden kann, um etwa eine Identifizierungskennung (z.B. Sendungsnummer) der Warentransaktion zu erfassen.

Unter Betreiber des Server-Computersystems wird hierin insbesondere eine natürliche oder juristische Person (oder auch ein Verbund aus mehreren solcher Personen) verstanden, die das Server-Computersystem federführend und verantwortlich betreibt. Der Betreiber kann sich auch (fremder oder eigener) Sub-Unternehmen bedienen, die dem Server-Computersystem computertechnische Ressourcen, wie etwa einen oder mehrere Server (z.B. Computer oder Computerpartitionen eingerichtet mit einer entsprechenden Server-Anwendung), entfernten Speicherplatz (sogenanntes Cloud-Computing) oder dergleichen, zur Verfügung stellen, die im Betrieb des erfindungsgemäßen Systems einen Teil des Server-Computersystems bilden.

Das Server-Computersystem ist insbesondere ein diskretes oder verteiltes Computersystem, das mit dem oder den Transaktionsterminals zur Ausführung des hierin beschriebenen Systems und Verfahrens zusammenwirkt.

Unter Auftraggeber einer Warentransaktion wird hierin insbesondere eine natürliche oder juristische Person (oder auch ein Verbund aus mehreren solcher Personen) verstanden, die eine Warentransaktion an einen Käufer der Ware(n) in Auftrag gibt und sich dazu insbesondere eines Drittanbieters zur Lieferung der Ware(n) an den Käufer bedient. Dies kann insbesondere ein Händler sein, der die Ware(n) der Warentransaktion originär vertreibt, oder auch ein Zwischenhändler, der die Ware(n) der Warentransaktion von einem Hersteller oder anderen Händler ankauft und an einen Käufer weiter verkauft. Im bevorzugten Anwendungsbereich der Erfindung handelt es sich um einen Internet-(Zwischen)-Händler, der den Verkauf der Ware(n) der Warentransaktion über das Internet betreibt (sogenannter Internet-Shop). Unter Auftraggeber der Warentransaktion soll insbesondere nicht der Dienstleister (wie z.B. ein Paketdienst) verstanden werden, der die Warentransaktion im Auftrag eines die Ware(n) verkaufenden (Zwischen-)Händlers lediglich logistisch ausführt, mithin die Ware(n) der Warentransaktion lediglich im Auftrag eines Händlers an den Käufer liefert.

Vorteile des erfindungsgemäßen Systems und Verfahrens liegen insbesondere darin, dass eine solche technische Abwicklung einer elektronischen Zahlungstransaktion in Bezug auf eine Warentransaktion unter Verwendung einer Girocard oder Prepaid-Karte oder dergleichen und bei Zwischenschaltung eines Lieferungsdienstes, der die Warentransaktion im Auftrag eines Auftraggebers ausführt, der die Zahlung empfangen soll, bis dato nicht möglich war. Das Gesamtsystem löst generell das Problem, das bis dato Kartenzahlungen an einem Bedien- oder Transaktionsterminal nur dem Betreiber des Terminals gutgeschrieben werden konnten. In einem erfindungsgemäßen System und Verfahren kann hingegen unter Berücksichtigung des Zusatzmerkmals eines Auftraggebers in den im Transaktionsterminal und Server-Computersystem verarbeiteten Daten die m:n - Beziehung zwischen einer Vielzahl von Karteninhabern (=m) und einer Vielzahl von Auftraggebern (=n) aufgelöst werden.

Unter den Möglichkeiten, wie das Zusatzmerkmal eines Auftraggebers (und damit dessen Bankverbindung) einer elektronischen Zahlung zugeordnet werden kann, sollen insbesondere die folgenden nochmals beschrieben werden:
Erste Ausführungsform unter Benutzung eines mobilen Scanners des Lieferungsdienstes oder Paketdienstes, der z.B. von einem Auslieferfahrer bedient wird:
   Der Auftraggeber (z.B. Internet-Shop) übergibt über eine Schnittstelle seine Kundennummer beim Paketdienst und die nötigen Sendungsdaten eines Warenpakets (mithin einer Warentransaktion) vor Lieferung an den Käufer an den Paketdienst. Der Paketdienst leitet diese Informationen bis zum Scanner des Auslieferfahrers, dem (fest installierten oder mobilen) Scanner eines Paketshops oder der Datenbank einer automatisierten Packstation weiter.

Im Falle einer elektronischen Zahlungstransaktion, initiiert mit den übertragenen Kartendaten bei Abwicklung bzw. Übergabe der Warentransaktion, übergibt der Scanner bzw. die entsprechende Prozesseinheit der Packstation die Kundennummer (sowie andere Sendungsdaten) an das Transaktionsterminal (auch sogenanntes PoS-Terminal). Gemeinsam mit den Kartendaten können diese Daten in einer Transaktionsdatenbank des Server-Computersystems gespeichert werden. In einer Stammdatenbank des Server-Computersystems zu den Auftraggebern (hier: Internet-Shops) sind alle Kundennummern, die von den Versandpartnern (Paketdienste) zugewiesen wurden, abgelegt. So kann das Server-Computersystem die Zahlungstransaktionen von einem Treuhandkonto des ersten Transaktionssystems an die Auftraggeber (bzw. deren jeweilige zugeordnete Transaktionssysteme) erzeugen.

Ausführungsform unter Benutzung einer Datenbank mit Sendungsnummern und Kundennummern:
Im Unterschied zur ersten Ausführungsform übergeben die jeweiligen Scanner bzw. Packstationen nicht die Kundennummer des Auftraggebers (Internet-Shops) an das Server-Computersystem, sondern die Sendungsnummer des ausgelieferten Pakets (mithin der Warentransaktion). Um die Zuordnung der wechselnden Sendungsnummern zur Kundennummer des jeweiligen Auftraggebers zu ermöglichen, kann der Paketdienst dem Server-Computersystem z.B. über das Internet Zugriff auf seine interne Datenbank gewähren, in der jeder Sendung eindeutig die Kundennummer des Versenders (Auftraggebers, hier Internet-Shop) zugeordnet ist. Optional kann der Paketdienst auch zu tätigende Warentransaktionen mit Kundennummern exportieren, so dass das Server-Computersystem diese zuordnen kann.

Bei der Ausführungsform unter Benutzung von Bankverbindungsdaten des Auftraggebers übergibt im Unterschied zur ersten Ausführungsform (Auftraggeber-Identifikationskennung) das jeweilige Transaktionsterminal nicht die Auftraggeber-Identifikationskennung des Auftraggebers (Händlers, z.B. Internet-Shops) an das Server-Computersystem, sondern dessen Gutschrifts-Bankverbindung (bis 31.1.2014 Bankleitzahl und Kontonummer, ab 1.2.2014 IBAN). In dieser Ausführungsform müssen die für den Zahlungsverkehr nötigen Informationen nicht vorab in den Stammdaten des Server-Computersystems erfasst werden, weil sie mit übertragen und direkt verarbeitet werden können. Dies bietet sich für Auftraggeber an, die nur unregelmäßig Waren ausliefern, wie z.B. private Verkäufer auf einer Internet-Auktionsplattform wie z.B. eBay. Hierzu wird beispielsweise die Bankverbindung des Verkäufers (Auftraggebers) entweder manuell oder automatisch über einen Kartenleser z.B. bei einem Paketshop erfasst. Diese Information wird dann an das Server-Computersystem mitgeteilt und kann - ohne dass vorab die Stammdaten des Verkäufers im Server-Computersystem angelegt werden müssen - für die elektronische Zahlungstransaktionen an das Transaktionssystem, das dem Verkäufer zugeordnet ist, verarbeitet werden.

## Patentansprüche

1. System zur Abwicklung einer elektronischen Zahlungstransaktion in Bezug auf eine Warentransaktion, aufweisend
- wenigstens ein Transaktionsterminal (20) und ein vom Transaktionsterminal separates und entferntes Server-Computersystem (50) für das Transaktionsterminal,
- wobei das Transaktionsterminal (20) über eine Identifikationskennung identifizierbar und zur Abwicklung einer elektronischen Zahlungstransaktion in Bezug auf eine Warentransaktion über ein Kommunikationsnetzwerk (22) mit dem Server-Computersystem (50) koppelbar ist, und aufweist:
- - eine Erfassungseinrichtung (24) zum Erfassen von Kartendaten (41) wenigstens einer Karte (40) für den elektronischen Zahlungsverkehr,
- - eine erste Eingabeschnittstelle (21, 23), die geeignet ist, einen Bezahlbetrag (11) zu erfassen,
- - eine zweite Eingabeschnittstelle (23), die geeignet ist, wenigstens ein Zusatzmerkmal (12) eines Auftraggebers (10) der Warentransaktion zu erfassen,
- - eine Übertragungseinrichtung eingerichtet zur Übertragung von Daten an das Server-Computersystem (50), welche die Identifikationskennung, wenigstens einen Teil der erfassten Kartendaten (41), den Bezahlbetrag (11) und das Zusatzmerkmal (12) des Auftraggebers beinhalten,
- wobei das Server-Computersystem (50) zur Abwicklung von elektronischen Zahlungstransaktionen über ein Kommunikationsnetzwerk (52) mit einem ersten Transaktionssystem (70) koppelbar ist und aufweist:
- - eine Empfangseinrichtung zum Empfang der vom Transaktionsterminal (20) übertragenen Daten,
- - eine Authentifizierungseinrichtung zur Authentifizierung des Transaktionsterminals (20) am Server-Computersystem (50),
- - eine Autorisierungseinrichtung, die eingerichtet ist, eine Kartenzahlungstransaktion in Bezug auf die übertragenen Kartendaten (41) und des Bezahlbetrags (11) unter Erfassung von Kartenzahlungsdaten (62) zu autorisieren,
- - eine Anweisungseinrichtung, die eingerichtet ist, eine erste elektronische Zahlungstransaktion (72) aus den Kartenzahlungsdaten an das erste Transaktionssystem (70) zu veranlassen, das einem Betreiber des Server-Computersystems (50) zugeordnet ist und unter Heranziehung des Zusatzmerkmals (12) des Auftraggebers eine zweite elektronische Zahlungstransaktion (75) von dem ersten Transaktionssystem (70) an ein zweites Transaktionssystem (80) zu veranlassen, das dem Auftraggeber (10) der Warentransaktion zugeordnet ist.

2. System nach Anspruch 1, wobei das Zusatzmerkmal (12) des Auftraggebers der Warentransaktion eine Auftraggeber-Identifikationskennung beinhaltet.

3. System nach Anspruch 1 oder 2, wobei das Zusatzmerkmal (12) des Auftraggebers der Warentransaktion eine Identifizierungskennung der Warentransaktion beinhaltet, insbesondere eine Sendungsnummer der Warentransaktion.

4. System nach Anspruch 3, wobei das Server-Computersystem (50) eingerichtet ist, für eine Zuordnung der Identifizierungskennung an den Auftraggeber auf eine interne oder externe Datenbank zuzugreifen, in der jeder darin enthaltenen Identifizierungskennung eindeutig eine Identifikation des Auftraggebers der Warentransaktion zugeordnet ist.

5. System nach einem der Ansprüche 1 bis 4, wobei das Zusatzmerkmal (12) des Auftraggebers der Warentransaktion eine Bankverbindungsinformation des Auftraggebers der Warentransaktion beinhaltet.

6. System nach einem der Ansprüche 1 bis 5, wobei die zweite Eingabeschnittstelle (23) eingerichtet ist, das Zusatzmerkmal (12) des Auftraggebers der Warentransaktion manuell oder über eine Schnittstelle von einem externen Gerät, insbesondere in Form eines Scanners oder einer Packstation, zu erfassen.

7. System nach einem der Ansprüche 1 bis 6, wobei das Server-Computersystem (50) einen Transaktionsdatenspeicher aufweist, in welchem das Zusatzmerkmal (12) des Auftraggebers und die übertragenen Kartendaten (41) gespeichert sind.

8. System nach einem der Ansprüche 1 bis 7, wobei das Server-Computersystem (50) einen Stammdatenspeicher aufweist, in dem jeweilige Zusatzmerkmale (12) von mehreren Auftraggebern von Warentransaktionen gespeichert sind.

9. System nach Anspruch 8, wobei die Anweisungseinrichtung eingerichtet ist, auf den Stammdatenspeicher des Server-Computersystems (50) zuzugreifen und zur Veranlassung der zweiten elektronischen Zahlungstransaktion (75) das zweite Transaktionssystem (80) anhand eines aus dem Stammdatenspeicher ausgewählten Zusatzmerkmals (12) zu bestimmen.

10. System nach einem der Ansprüche 1 bis 9, wobei die Erfassungseinrichtung (24) zum Erfassen von Kartendaten (41) eine Kartenleseeinrichtung aufweist, die insbesondere als eine Magnetstreifen-, Chip- und/oder Kontaktlos-Leseeinrichtung ausgebildet ist.

11. System nach einem der Ansprüche 1 bis 10, wobei die Autorisierungseinrichtung zur Verarbeitung einer bereits von der Karte (40) und dem Transaktionsterminal (20) oder auf anderem Wege vorautorisierten Kartenzahlungstransaktion ausgebildet ist.

12. System nach einem der Ansprüche 1 bis 11, wobei die Autorisierungseinrichtung eingerichtet ist, zur Autorisierung einer Kartenzahlungstransaktion Kartendaten (41) bezüglich einer bereits von der Karte und dem Transaktionsterminal oder auf anderem Wege vorautorisierten Kartenzahlungstransaktion nach der Übertragung vom Transaktionsterminal (20) zu speichern, oder zur Autorisierung einer Kartenzahlungstransaktion eine Zahlungstransaktionsanfrage (61) an ein Serversystem (60) eines der Karte (40) zugeordneten Kartenherausgebers zu übertragen und ein vom Serversystem (60) erhaltenes Ergebnis (62) der Zahlungstransaktionsanfrage zu speichern.

13. Verfahren zur Abwicklung einer elektronischen Zahlungstransaktion in Bezug auf eine Warentransaktion in einem Datenverarbeitungsnetzwerk, das wenigstens ein Transaktionsterminal (20) und ein vom Transaktionsterminal separates und entferntes Server-Computersystem (50) für das Transaktionsterminal aufweist, wobei
- das Transaktionsterminal (20) über eine Identifikationskennung identifizierbar und zur Abwicklung einer elektronischen Zahlungstransaktion in Bezug auf eine Warentransaktion über ein Kommunikationsnetzwerk (22) mit dem Server-Computersystem (50) koppelbar ist, und
- das Server-Computersystem (50) zur Abwicklung von elektronischen Zahlungstransaktionen über ein Kommunikationsnetzwerk (52) mit einem ersten Transaktionssystem (70) koppelbar ist,
mit folgenden Schritten:
- Erfassen von Kartendaten (41) wenigstens einer Karte (40) für den elektronischen Zahlungsverkehr an dem Transaktionsterminal (20),
- Erfassen eines Bezahlbetrags (11) an dem Transaktionsterminal (20),
- Erfassen wenigstens eines Zusatzmerkmals (12) eines Auftraggebers (10) der Warentransaktion an dem Transaktionsterminal (20),
- Übertragung von Daten von dem Transaktionsterminal (20) an das Server-Computersystem (50), welche die Identifikationskennung, wenigstens einen Teil der erfassten Kartendaten (41), den Bezahlbetrag (11) und das Zusatzmerkmal (12) des Auftraggebers beinhalten,
- Empfangen der vom Transaktionsterminal (20) übertragenen Daten am Server-Computersystem (50),
- Authentifizierung des Transaktionsterminals (20) am Server-Computersystem (50),
- Autorisierung einer Kartenzahlungstransaktion in Bezug auf die übertragenen Kartendaten (41) und des Bezahlbetrags (11) unter Erfassung von Kartenzahlungsdaten (62) durch das Server-Computersystem (50),
- Veranlassung durch das Server-Computersystem (50) einer ersten elektronischen Zahlungstransaktion (72) aus den Kartenzahlungsdaten an das erste Transaktionssystem (70), das einem Betreiber des Server-Computersystems (50) zugeordnet ist, und Veranlassung durch das Server-Computersystem (50) einer zweiten elektronischen Zahlungstransaktion (75) von dem ersten Transaktionssystem (70) an ein zweites Transaktionssystem (80), das dem Auftraggeber (10) der Warentransaktion zugeordnet ist, unter Heranziehung des Zusatzmerkmals (12) des Auftraggebers.

14. Transaktionsterminal (20), das eingerichtet ist zur Verwendung in einem Verfahren nach Anspruch 13.

15. Server-Computersystem (50), das eingerichtet ist zur Verwendung in einem Verfahren nach Anspruch 13.
